# EUROPÄISCHE PATENTSCHRIFT

(11) **EP 3 841 261 B1**
(45) Veröffentlichungstag und Bekanntmachung des Hinweises auf die Patenterteilung: **03.01.2024**
(21) Anmeldenummer: 19759535.8
(22) Anmeldetag: 22.08.2019
(51) Int. Cl.: E04C 2/52, H05B 3/26

(54) **BELAG UND FUNKTIONSKÖRPER FÜR EINEN BELAG UND VERFAHREN ZUR HERSTELLUNG EINES BELAGS**
COVERING, FUNCTIONAL ELEMENT FOR A COVERING, AND METHOD FOR PRODUCING A COVERING
REVÊTEMENT ET CORPS FONCTIONNEL POUR UN REVÊTEMENT ET PROCÉDÉ DE FABRICATION D'UN REVÊTEMENT

(30) Priorität: 22.08.2018 DE 202018003862 U; 21.01.2019 DE 202019000250 U
(43) Veröffentlichungstag der Anmeldung: 30.06.2021
(73) Patentinhaber: EliTilE AG, 66126 Saarbrücken (DE)
(72) Erfinder: WILMES, Rolf, 66571 Eppelborn (DE); THULL, Ralf, 31693 Hespe (DE)
(74) Vertreter: Hoener, Matthias
(86) Internationale Anmeldenummer: PCT/EP2019/072507
(87) Internationale Veröffentlichungsnummer: WO 2020/039037

(56) Entgegenhaltungen:
- EP-A1- 2 728 081
- WO-A1-2008/091070
- KR-A- 20060 004 723
- KR-A- 20140 089 716
- KR-B1- 101 374 266

## Beschreibung

Die Erfindung betrifft einen Funktionskörper für einen Belag, insbesondere einen Bodenbelag oder ein Deckenelement, gemäß dem Oberbegriff des Anspruchs 1. Des Weiteren Betrifft die Erfindung einen Belag gemäß dem Anspruch 13. Außerdem betrifft die Erfindung ein Verfahren zur Herstellung eines Belags mit einem Funktionskörper gemäß dem Anspruch 14.

Es ist bekannt, für eine Temperierung, insbesondere für eine Beheizung, eines Belags, vorzugsweise eines Bodenbelags oder eines Wandbelags oder eines Deckenelementes, unter den einzelnen Belagelementen eine Heizleitung zu verlegen. So lassen sich beispielsweise öffentliche Plätze, Gehwege, aber auch private Terrassenflächen erwärmen, was insbesondere bei einer kalten Witterung vorteilhaft sein kann. So können die genannten Flächen auch im Winter eisfrei gehalten werden. Für die Beheizung der Beläge werden normalerweise elektrische Leitungen verwendet oder Rohre, die ein erwärmbares Wärmemittel führen. Diese Leitungen werden unter den gesamten Bereichen der Fliesen derart angeordnet, dass die Fläche homogen erwärmt wird. Üblicherweise werden dazu die Leitungen auf Split oder auf Magerbeton oder dergleichen verlegt, auf dem auch der Belag verlegt wird. Bei diesen bekannten Verfahren wird somit zunächst die Heizleitung in eine das Fundament bildende Schicht integriert und sodann auf diese Leitung bzw. auf diese Schicht der Belag verlegt. Bei den genannten Belägen kann es sich sowohl um Fliesen, Kacheln oder auch Paneele oder sonstige Mittel zum Belegen eines Bodens oder zum Verkleiden einer Wand oder einer Decke handeln.

Ein Nachteil einer auf oder in dem Untergrund verlegten Heizleitung besteht darin, dass bei einem Defekt der Leitung, wie beispielsweise einem Leck, dieser nicht lokalisiert werden kann und somit für eine Reparatur sämtliche Fliesen anzuheben sind.

Ein weiterer Nachteil bekannter Beläge, insbesondere Bodenbeläge, besteht darin, dass diese auf Stelzlagern verlegt werden und dabei nicht über die gesamte Fläche homogen beheizbar sind. Außerdem sind für die Verwendung von Stelzlagern lediglich Beläge mit einer großen Stärke bzw. Dicke verwendbar. Dies führt jedoch zum einen zu erhöhten Kosten und zum anderen zu einer schlechten Wärmeleitfähigkeit. Dünnere Fliesen weisen zwar eine bessere Leitfähigkeit auf, andererseits steigt jedoch die Gefahr, dass die Fliesen bei hoher Belastung brechen.

Ein weiterer Nachteil in der Verwendung von Stelzlagern besteht darin, dass durch die Lager zwischen dem Belag und dem Untergrund ein Zwischenraum entsteht. Aufgrund dieses Zwischenraumes lassen sich Fliesen, die auf Stelzlagern gelagert sind, nicht über das oben beschriebene Verfahren temperieren. Würde man die Heizleitungen auf dem Untergrund ablegen, wirkt die Luft zwischen den Fliesen und dem Untergrund thermisch isolierend, sodass nur ein Bruchteil der freigesetzten thermischen Energie auf die Fliesen übertragen wird. KR20140089716 beschreibt einen Funktionskörper mit den Merkmalen des Oberbegriffs des Anspruchs 1.

Vor diesem Hintergrund besteht die Aufgabe der vorliegenden Erfindung darin, ein Funktionskörper sowie einen Belag zu schaffen und ein Verfahren zur Herstellung eines Belags, der auf eine einfache und effiziente Art und Weise temperierbar ist und eine erhöhte Stabilität aufweist sowie günstig und flexibel herstellbar ist.

Ein Funktionskörper zur Lösung dieser Aufgabe weist die Merkmale des Anspruchs 1 auf. Demnach ist es vorgesehen, dass der Funktionskörper mit einer Unterseite auf einem Untergrund ablegbar ist und mit einer Oberseite mit dem Belag zusammenfügbar ist. Bei dem Belag kann es sich beispielsweise um einen Bodenbelag, aber auch um einen Wandbelag oder um ein Deckenelement handeln, insbesondere um eine Fliese, eine Kachel, ein Paneel oder dergleichen für Anwendungen für Innen- sowie Außenbereiche. Auf oder in die Oberseite des Funktionskörpers ist ein Mittel zum Temperieren angeordnet. Somit wird das Mittel zum Temperieren, vorzugsweise zum Heizen oder Kühlen, sandwichartig zwischen den Belag und den Funktionskörper eingeschlossen, sodass die Wärmeenergie effizient und wenigstens nahezu ohne Wärmeverlust auf den Belag übertragbar ist.

Erfindungsgemäss entspricht eine Größe und eine Form einer Grundfläche des Funktionskörpers wenigstens nahezu einer Größe und/oder einer Form einer Grundfläche des Belags. Somit kann der Funktionskörper wenigstens nahezu deckungsgleich unter dem Belag angeordnet werden. Durch Aneinanderfügen mehrerer Beläge zu einer flächendeckenden Belegung eines Untergrunds oder einer Wand lassen sich alle einzelnen Beläge effizient und lückenlos temperieren. Dadurch, dass allen Belägen ein eigener Funktionskörper zugeordnet ist, dessen Größe wenigstens nahezu mit der Größe und Form des Belags übereinstimmt, wird die Bildung von Kältesenken vermieden. Außerdem ist es denkbar, dass die Funktionskörper in ihrer Grüße und/oder Form an den Belag angepasst werden. Insbesondere für Randbereiche bspw. einer Terrasse oder bei einem bestimmten Belagmuster lassen sich die Funktionskörper individuell und situationsbedingt in ihrer Form und Größe anpassen.

Weiter ist es erfindungsgemäss vorgesehen, dass der Funktionskörper aus einem wärmedämmenden Material besteht, wie beispielsweise einem Schaum, Styropor, einem Kunststoff, Holzfasern, Stein-, Glas- oder Mineralwolle, Vakuumisolationspaneelen oder dergleichen. Durch die Wahl eines derartigen wärmedämmenden Materials wird die thermische Energie des Mittels zum Temperieren nahezu vollständig auf den Belag übertragen. Aufgrund der schlechten Wärmeleitfähigkeit der genannten Stoffe wird von dem Funktionskörper nur wenig thermische Energie absorbiert. Darüber hinaus lassen sich die genannten Materialien sehr gut und einfach bearbeiten bzw. in ihrer Form verändern.

Weiter ist es erfindungsgemäss vorgesehen, dass eine äußere Umrandung an der Oberseite des Funktionskörpers ein Dichtmittel, insbesondere eine Dichtfläche oder eine Dichtlippe, aufweist, die vorzugsweise selbstklebend ist und mit dem Belag zusammenführbar ist. Dieses Dichtmittel führt dazu, dass sich der Funktionskörper auf eine besonders vorteilhafte Art und Weise mit dem Belag verbinden lässt. Beim Zusammenfügen des Funktionskörpers mit dem Belag wird auf dem Funktionskörper ein Klebstoff aufgetragen. Damit der Klebstoff beim Anfügen des Belags auf den Funktionskörper nicht über die Umrandung des Funktionskörpers hinaustritt, sind die Dichtmittel vorgesehen. Diese Dichtmittel verhindern, dass der Klebstoff über die Umrandung des Funktionskörpers bzw. des Belags tritt. Damit dieses insbesondere selbstklebende Dichtmittel nicht bereits vor dem Zusammenfügen des Belags mit dem Funktionskörper verdreckt oder seine ggf. gegebene Klebewirkung verliert, kann es vorgesehen sein, dass auf der selbstklebenden Umrandung ein Schutzfilm vorgesehen ist.

Ein weiteres vorteilhaftes Ausführungsbeispiel der vorliegenden Erfindung kann es vorsehen, dass in dem Funktionskörper Verstärkungselemente und/oder Armierungselemente aus Kunststoff, Metall oder dergleichen integriert, vorzugsweise eingearbeitet oder eingegossen, sind, wobei die Verstärkungselemente und/oder Armierungselemente in Eckbereichen und/oder Seitenbereichen und/oder kreuzartig über die gesamte Fläche des Funktionskörpers und/oder flächig über den Funktionskörper angeordnet sind. Durch diese Verstärkungselemente bzw. Armierungselemente enthält der Funktionskörper eine erhöhte Stabilität. Diese erhöhte Stabilität gestaltet die Verwendung besonders dünner Fliesen. Dünne Fliesen haben unter anderem den Vorteil, dass sie besser temperierbar sind und dass sie aufgrund des geringeren Gewichts leichter verlegbar sind. Durch die Verstärkungselemente bzw. Armierungselemente des Funktionskörpers wird eine Bruchgefahr, die normalerweise bei dünnen Fliesen besteht, verringert.

Besonders bevorzugt kann es vorgesehen sein, dass mindestens ein Bereich, vorzugsweise ein Kantenbereich und/oder ein Eckbereich, insbesondere alle vier Eckbereiche eines rechteckigen Funktionskörpers, des Funktionskörpers eine Verstärkung aufweist, wobei es sich bei der Verstärkung um ein insbesondere gießfähiges Material, wie beispielsweise Harz, Mörtel oder dergleichen, handelt und sich diese Verstärkung über eine gesamte Höhe des Funktionskörpers in den Funktionskörper erstreckt. Bei einem rechteckigen Funktionskörper ist es vorgesehen, dass alle vier Eckbereiche eine derartige Verstärkung aufweisen. Für diese Verstärkung werden die entsprechenden Bereiche in dem Funktionskörper herausgearbeitet und sodann mit den genannten fließfähigen Materialien wieder aufgefüllt, sodass der Funktionskörper in diesen Bereichen eine erhöhte Druckfestigkeit aufweist. Mit diesen Verstärkungen bzw. verstärkten Bereichen lässt sich der Funktionskörper auf einem Stelzlager absetzen. Bei rechteckigen Funktionskörpern kann jedem Eckbereich bzw. jeder Verstärkung ein Stelzlager zugeordnet sein. Bei einer flächigen mehrere Beläge aufweisenden Bodenbedeckung sind jedem Stelzlager mehrere Funktionskörper bzw. mehrere verstärkte Bereiche des Funktionskörpers zuordbar. Durch diese lokale Verstärkung der Funktionskörper kann sich das Dämmmaterial über die gesamte Grundfläche des Belags erstrecken. Dadurch kann auch das Mittel zum Temperieren der gesamten Grundfläche des Belags zugeordnet werden. Die Verstärkung des Funktionskörpers führt somit dazu, dass der gesamte Belag homogen temperierbar ist, und zwar ohne, dass beispielsweise Eckbereiche von der Temperierung ausgeschlossen sind. Gleichermaßen ist es denkbar, dass auch Bereiche zwischen den Kanten bzw. Randbereichen des Funktionskörpers, insbesondere Zentralbereiche, eine Verstärkung aufweisen. Auch diesen Bereichen, die gleichermaßen ausgebildet sind wie die zuvor diskutierten Eckbereiche, sind Stelzlager zuordbar. Insbesondere bei größeren und/oder dünneren Fliesenbelägen kann eine zentrale Stelzlagerung vorteilhaft sein.

Darüber hinaus kann es vorgesehen sein, dass der Funktionskörper jeweils mit einer Verstärkung auf einem Stelzlager absetzbar ist, wobei ein Funktionskörper mit vier eine Verstärkung aufweisenden Bereichen auf vier Stelzlagern absetzbar ist und/oder mit einer Verstärkung eines zentralen Bereichs des Funktionskörpers auf mindestens ein Stelzlager absetzbar ist.

Es ist insbesondere vorgesehen, dass der Funktionskörper eine Höhe von 10 mm bis 50 mm bzw. 20 mm bis 40 mm, insbesondere von 30 mm, aufweist. Diese Dimensionierung führt zum einen zu einer ausreichenden Wärmedämmung und zum anderen bietet sie der Verstärkung eine ausreichende Dicke bzw. Stärke, um Lasten auf den Belag aufzufangen oder zu kompensieren.

Der Belag ist mit der Oberseite des Funktionskörpers verbindbar bzw. verklebbar. Dazu wird der Oberseite des Funktionskörpers ein entsprechendes Klebemittel zugeführt, das sich ggf. zwischen dem Mittel zum Temperieren verteilt und mit dem Belag eine Haftwirkung ausbildet. Für den Fall, dass das Mittel zum Temperieren in die Oberseite des Funktionskörpers integriert ist, deckt das Verbindungsmittel die Oberseite des Funktionskörpers flächig ab und tritt so vollflächig in Kontakt mit dem Belag.

Ein weiteres Ausführungsbeispiel der Erfindung kann es vorsehen, dass die Oberseite des Funktionskörpers mindestens einen, insbesondere schnecken- oder mäanderförmigen, Kanal oder ein wabenartiges Muster oder eine Profilierung mit einer Waffelstruktur zur Aufnahme des Mittels zum Temperieren aufweist, wobei sich der Kanal oder das Muster über die gesamte Oberseite erstreckt. Diese Kanäle bzw. Muster oder Profilierungen können in den Funktionskörper hineingefräst werden. Außerdem kann bei einer Herstellung des Funktionskörpers eine entsprechende Form bereits diese Kanäle bzw. Muster oder Profilierungen aufweisen. Bei der Verklebung des Funktionskörpers mit dem Belag werden diese Kanäle bzw. Muster oder Profilierungen mit dem entsprechenden Klebemittel aufgefüllt, sodass das Mittel zum Temperieren darin integriert ist. Durch das Auffüllen der Kavitäten wird ein Wärmestau in dem Funktionskörper vermieden. Dabei ist darauf zu achten, dass das Klebemittel eine möglichst gute Wärmeleitfähigkeit aufweist.

Bevorzugt ist es vorgesehen, dass das Mittel zum Temperieren einen Heizdraht, ein Rohr zum Führen eines Wärme- oder Kältemittels oder dergleichen ist, das in dem Kanal oder dem Muster angeordnet ist. Dieser Heizdraht bzw. das Rohr kann schnecken- oder mäander- oder andersartig der Oberseite des Funktionskörpers zugeordnet sein. Dazu wird der Heizdraht oder das Rohr derart zwischen dem Belag oder der Oberseite des Funktionskörpers angeordnet, dass der Belag wenigstens weitestgehend homogen erwärmbar ist. Dazu werden zwei erste Enden des Heizdrahtes bzw. Anschlüsse oder Ventile des Rohres über einen Rand des Funktionskörpers abgeführt oder weggeführt. Diese beiden ersten Enden oder Ventile weisen Mittel, wie beispielsweise Stecker, Klemmen, Klemmverbinden, Lötverbinden, Ventile oder dergleichen auf, um mit anderen Drähten bzw. Rohren benachbarter Beläge, verbunden oder gekoppelt zu werden. Über diese beiden Enden lässt sich somit der Bodenbelag erwärmen. Entweder sind diese beiden ersten Enden eines Bodenbelags direkt mit einer entsprechenden Energiequelle bzw. Flüssigkeitsquelle verbunden oder eine Vielzahl von in Reihe oder parallel geschalteter Beläge sind mit einer Quelle zur Erzeugung elektrischer Energie bzw. einer Pumpe zum Leiten einer Flüssigkeit verbunden. Über eine entsprechende Steuerung lassen sich somit der Belag bzw. die Vielzahl der Beläge durch Beaufschlagung der Heizdrähte bzw. der Rohre mit thermischer Energie erwärmen. Diese Ansteuerung der Energiequelle kann beispielsweise direkt über einen Schalter erfolgen oder ferngesteuert, wie beispielsweise über eine App eines Mobilfunkgerätes.

Es kann außerdem vorgesehen sein, dass das Mittel zum Temperieren, insbesondere der Heizdraht, zwischen zwei Gitterstrukturen aus vorzugsweise Metall oder Kunststoff, eingeschlossen wird. Dabei können die beiden Gitterstrukturen, die in ihrer Form wenigstens weitestgehend mit der Form des Funktionskörpers korrespondieren, durch Verbindungselemente miteinander gekoppelt sein. Der bspw. mäanderartige Verlauf des Mittels zum Temperieren wird durch die beiden zusammengefügten Gitterstrukturen erhalten. So kann der Belag zusammen mit dem Funktionskörper und den das Mittel zum Temperieren aufweisenden Gitterstrukturen ein Bausatz bilden, aus dem sich durch Zuführen eines Klebemittels der temperierbare Belag zusammensetzen lässt.

Die vorliegende Erfindung kann es außerdem vorsehen, dass die Unterseite des Funktionskörpers mindestens einen, insbesondere schnecken- oder mäanderförmigen, Kanal oder ein wabenartiges Muster zur Aufnahme von Kabeln der Mittel zum Temperieren aufweist. Auf diese Art lassen sich insbesondere Verbindungskabel der verschiedenen Mittel zum Temperieren unter den Funktionskörper auf eine geordnete und sichere Art und Weise verstauen bzw. verlegen. Durch diese weiteren Kanäle bzw. Muster an der Unterseite des Funktionskörpers lässt sich ein kompaktes Element, nämlich der Funktionskörper, bilden, der lediglich zwei Anschlüsse aufweist, über die er mit weiteren Funktionskörpern koppelbar ist. Durch Zusammenfügen des Funktionskörpers mit einem Belag lassen sich somit jeder Bodenbelag, Wandbelag sowie Deckenelemente auf eine einfache, flexible und schnelle Art und Weise verlegen.

Außerdem kann es vorgesehen sein, dass die Unterseite des Funktionskörpers eine symmetrische Kanalstruktur aufweist zur Aufnahme gleichlanger Kabelabschnitte oder Rohrabschnitte, sodass Steckverbindungen benachbarter Funktionskörper im gleichen Maße über den jeweiligen Funktionskörper hinausragen. Bei dieser Kanalstruktur kann es vorgesehen sein, dass dem Funktionskörper eine zentrale Mulde zugeordnet ist, in der beispielsweise ein Mittel zum Temperieren oder dergleichen angeordnet ist. Die von dieser zentrierten Mulde abführenden Kanäle weisen zu den Seitenkanten jeweils eine gleiche Länge auf bzw. sind symmetrisch aufgebaut. Durch diese symmetrische Ausbildung der Kanäle zu allen Seitenkanten kann der Belag bzw. der Funktionskörper richtungsunabhängig auf dem Untergrund verlegt werden, d. h., der Belag bzw. der Funktionskörper hat keine bevorzugte Ausrichtung und kann somit besonders flexibel verwendet werden. Durch den symmetrischen Aufbau der Kanalstruktur können insbesondere Kabel aufweisende Komponenten, welche der Unterseite zugeordnet werden, besonders flexibel verlegt bzw. verwendet werden. Unabhängig davon, wie der Belag verlegt wird, steht immer die gleiche Länge eines Kabelabschnitts zur Verfügung, um eine Verbindung mit einer Steuereinheit bzw. einer Leitung bzw. einem Kabel eines benachbarten Belags herzustellen.

Des Weiteren kann es vorgesehen sein, dass Seitenbereiche des Funktionskörpers Aussparungen aufweisen zur Aufnahme der Mittel, insbesondere Stecker, Klemmen, Crimpverbindungen, Lötverbindungen, Ventile oder dergleichen, zum Verbinden mehrerer Heizdrähte oder Rohre benachbarter Funktionskörper. Diese Aussparungen sind genau derart bemessen, dass sich die genannten Mittel zum Verbinden mehrerer Heizdrähte bzw. Rohre verstauen lassen. Dabei sind diese Aussparungen derart der Unterseite zugeordnet, dass die Kontaktfläche der Oberseite des Funktionskörpers mit dem Belag von dieser Aussparung unberührt bleibt. Dadurch wird die optimale Wärmeübertragung zwischen dem Funktionskörper bzw. dem Mittel zum Temperieren und dem Belag beibehalten.

Des Weiteren kann es erfindungsgemäß vorgesehen sein, dass zwei zweite Enden des Heizdrahtes miteinander verbunden sind, und zwar vorzugsweise durch ein Thermoelement, einen Überhitzungsschutz, einen Widerstand, einen Temperatursensor, einen Bimetallschalter oder dergleichen. Es ist außerdem denkbar, dass jedem Bodenbelag bzw. jeder Fliese oder jeder Kachel ein weiteres Kabel zum Auslesen eines Sensormittels, wie beispielsweise eines Thermometers oder eines Feuchtesensors, zugeordnet ist. Durch die Ermittlung der Temperatur bzw. der Feuchte lässt sich der Bodenbelag bzw. die Fliese klimaabhängig temperieren. Durch eine derartige Steuerung kann ein Höchstmaß an Wohlbefinden einer Person erzielt werden, die sich auf dem Belag aufhält bzw. in einem Raum befinden, dessen Wände mit den erfindungsgemäßen Belägen bzw. Funktionskörpern versehen sind.

Eine Weiterentwicklung der vorliegenden Erfindung kann darin bestehen, dass das Mittel zum Temperieren des Bodenbelags mindestens ein Rohr zum Führen eines Kühlmittels aufweist, wobei die Enden des mindestens einen Rohres Verbindungsmittel und/oder Ventile aufweisen zum Verbinden des mindestens einen Rohres mit weiteren Rohren, vorzugsweise weiteren Rohren benachbarter Bodenbeläge. Die einzelnen Rohre benachbarter Bodenbeläge werden durch eine Pumpe mit der gekühlten Flüssigkeit versehen. Für die Kühlung der Flüssigkeit ist eine entsprechende Einrichtung zum Kühlen von Flüssigkeiten vorgesehen. Durch das Entlangströmen des Kühlmittels an der Unterseite des Bodenbelags bzw. der Fliese wird dem Bodenbelag Wärmeenergie entzogen, sodass sich auch die Oberseite des Bodenbelags abkühlt. Dies kann insbesondere bei einem Randbereich eines Schwimmbades oder ausgewiesenen Flächen in heißen Regionen vorteilhaft sein. Dadurch, dass die Enden eines Rohres eines Bodenbelags ein Ventil aufweisen, können die einzelnen Bodenbeläge einer derartige Bodenbeläge aufweisenden Fläche einzeln gekühlt werden. Außerdem lässt sich so beispielsweise über eine gezielte Ansteuerung der Ventile ein defekter Bodenbelag auf eine einfache Art und Weise austauschen. Dazu werden die Ventile eines Rohres eines Belags, insbesondere automatisch, geschlossen, und zwar ohne, dass die Temperierung der übrigen Beläge dadurch beeinflusst wird. Dazu kann es vorgesehen sein, dass der defekte Belag oder eine Bypassleitung von der Temperierung der angesprochenen Fläche ausgenommen wird. Es ist auch für dieses Ausführungsbeispiel vorgesehen, dass dem Funktionskörper ein Temperatursensor oder ein Feuchtesensor zugeordnet sein kann.

Weiter kann es erfindungsgemäß vorgesehen sein, dass mittels einer Steuereinheit die Temperatur für einen Belag mit einem Mittel zum Temperieren festgelegt ist (*master*) und weiter mit dem Funktionskörper bzw. mit dem Mittel zum Temperieren gekoppelte Funktionskörper (*slave*) sich an diese Temperatur anpassen. Über diese master-slave-Steuerung lässt sich die Temperatur aller Beläge mit einem sehr geringen Steueraufwand regeln. Außerdem ist es denkbar, dass einzelne Beläge oder Gruppen von Belägen individuell durch die Steuereinheit temperierbar sind. So kann es vorgesehen sein, dass nur einzelne, beispielsweise in einem Sitzbereich einer Terrasse angeordnete, Beläge temperiert werden, während andere nicht temperiert werden. Gleichermaßen können ganze Gruppen bzw. Bereiche oder Areale von Belägen gemeinschaftlich temperiert werden. Auf diese Weise kann ein Bodenbelag auf eine besonders effiziente und energiesparende Art und Weise temperiert werden. Durch die Steuereinheit lässt sich gezielt jeder einzelne Belag bzw. jeder einzelne Funktionskörper einzeln und individuell ansteuern.

Außerdem kann es vorgesehen sein, dass die Steuereinheit mit mindestens einem in dem Funktionskörper und/oder den Belag integrierten Sensormittel verbunden ist, wobei der Funktionskörper und/oder der Belag in Abhängigkeit von einem Messwert des Sensormittels temperierbar sind. Bei einem derartigen Sensormittel kann es sich beispielsweise um einen Temperatursensor, einen Feuchtigkeitssensor oder einen Drucksensor handeln. So ist es beispielsweise denkbar, dass über einen Drucksensor festgestellt wird, ob auf einem Belag eine Person steht bzw. ein Stuhl. Sodann lässt sich genau dieser Bereich bzw. dieser Bodenbelag temperieren. Eine weitere Ausführungsform kann es vorsehen, dass bei der Messung einer Befeuchtung des Belags selbiger beheizt wird, um insbesondere bei Minustemperaturen eine Eisbildung zu vermeiden.

Ein weiterer Vorteil der vorliegenden Erfindung kann darin bestehen, dass die Mittel zum Temperieren des Belags mit einer elektrischen Netzspannung betreibbar sind. Die Bedienperson kann somit seine beheizbare Terrasse auf eine einfache Art und Weise mit einem beispielsweise 230 V Hausanschluss verbinden.

Außerdem kann es vorgesehen sein, dass der Funktionskörper durch eine Metallschicht oder eine Kunststoffschicht oder eine Schale, insbesondere eine Metallschale oder eine Kunststoffschale, geschützt ist. Diese Schicht bzw. Schale kann außerdem bewirken, dass die von dem Heizmittel abgestrahlte Infrarotstrahlung auf den Belag zurückreflektiert wird.

Weiter kann es vorgesehen sein, dass die Unterseite des Funktionskörpers ein Raster von Vorsprüngen, insbesondere Drainagenoppen, aufweist. Es kann auch vorgesehen sein, dass die Funktionskörper direkt auf einem Untergrund abgelegt werden. Damit die Funktionskörper auf diesem Untergrund stabil liegen und trotzdem ein ausreichender Austausch von Feuchtigkeit stattfinden kann, weist die Unterseite derartige Noppen bzw. Drainagenoppen auf. Durch derartige Noppen kann eine Verrastung mit dem Untergrund erfolgen. Gleichzeitig bleiben noch Zwischenräume bestehen, durch welche Feuchtigkeit entweichen kann.

Ein weiteres vorteilhaftes Ausführungsbeispiel der Erfindung kann es vorsehen, dass in den Funktionskörper und/oder in den Belag weitere Komponenten integrierbar sind, wie beispielsweise Lautsprecher, Leuchtmittel, Steckdosen, Netzwerkdosen oder dergleichen, die, insbesondere individuell oder in Gruppen, über entsprechende Leitungen unterhalb des Belags ansteuerbar sind. Die Leitungen können dabei beispielsweise mit der Steuereinheit gekoppelt sein, sodass auch diese Leitungen in der Kanalstruktur unter den Funktionskörpern verstaubar sind. Auf diese Weise lassen sich die einzelnen Beläge, insbesondere Boden- oder Wandbeläge, nutzen, um eine Lichtinstallation oder ein Soundsystem zu etablieren.

Ein Belag zur Lösung der eingangs genannten Aufgabe weist die Merkmale des Anspruchs 14 auf. Demnach ist es vorgesehen, dass ein Belag, insbesondere ein Bodenbelag oder ein Wandbelag oder ein Deckenelement, wie beispielsweise eine Fliese, eine Kachel oder ein Paneel, mit einem Funktionskörper gemäß mindestens einem der Ansprüche 1 bis 13 zusammenfügbar ist. Durch eine Vielzahl nebeneinander anordbaren Belägen können größere Boden- oder Wandflächen oder Decken mit den erfindungsgemäßen Belägen abgedeckt werden.

Ein Verfahren zur Lösung der eingangs genannten Aufgabe weist die Maßnahmen des Anspruchs 15 auf. Demnach ist es vorgesehen, dass zur Herstellung eines Belags gemäß dem Anspruch 14 mit einem Funktionskörper auf einen strukturierten Funktionskörper, in dem ein Mittel zum Temperieren integriert ist, ein fließfähiger Klebstoff aufgebracht wird und auf diesen mit Klebstoff versehenen Funktionskörper der Belag abgelegt wird.

Weiter kann es sodann vorgesehen sein, dass der Belag auf der mit Klebstoff beaufschlagten Oberseite des Funktionskörpers und einer den Funktionskörper umlaufenden Dichtung abgelegt wird und zum Austrocknen des Klebstoffs der Funktionskörper zusammen mit dem Belag gedreht wird, sodass der Klebstoff auf einer Unterseite des Belags austrocknet. Durch das Drehen des Verbundes, bestehend aus dem Belag und dem Funktionskörper, tritt der Klebstoff in Kontakt mit der zu bindenden Unterseite des Belags, wodurch sich eine feste Verbindung zwischen den genannten Bestandteilen ausbildet. Durch das Drehen verteilt sich der Klebstoff über die gesamte Unterseite des Belags, wodurch insbesondere die Bildung von isolierenden Luftblasen unterbunden wird. Der flüssige Klebstoff läuft insbesondere bis an die Randbereiche des Funktionskörpers, welche vorzugsweise von einem Dichtmittel abgeschlossen werden. Dieses erfindungsgemäße Verfahren zur Herstellung eines Belags kann sowohl manuell für individuell angefertigte Beläge durchgeführt werden sowie maschinell bzw. industriell in einer großen Stückzahl für wenigstens nahezu gleichartig ausgebildete Beläge.

Ein bevorzugtes Ausführungsbeispiel der vorliegenden Erfindung wird nachfolgend anhand der Zeichnung näher beschrieben. In dieser zeigen:
- Fig. 1: eine Sicht auf eine Oberseite eines Funktionskörpers,
- Fig. 2: einen Schnitt durch einen Seitenbereich des Funktionskörpers gemäß der Fig. 1,
- Fig. 3: eine Sicht auf eine Unterseite des Funktionskörpers,
- Fig.4: eine Ansicht eines Belags mit einem Funktionskörper auf zwei Stelzlagern, und
- Fig. 5: ein weiteres Ausführungsbeispiel eines Funktionskörpers mit einem Belag.

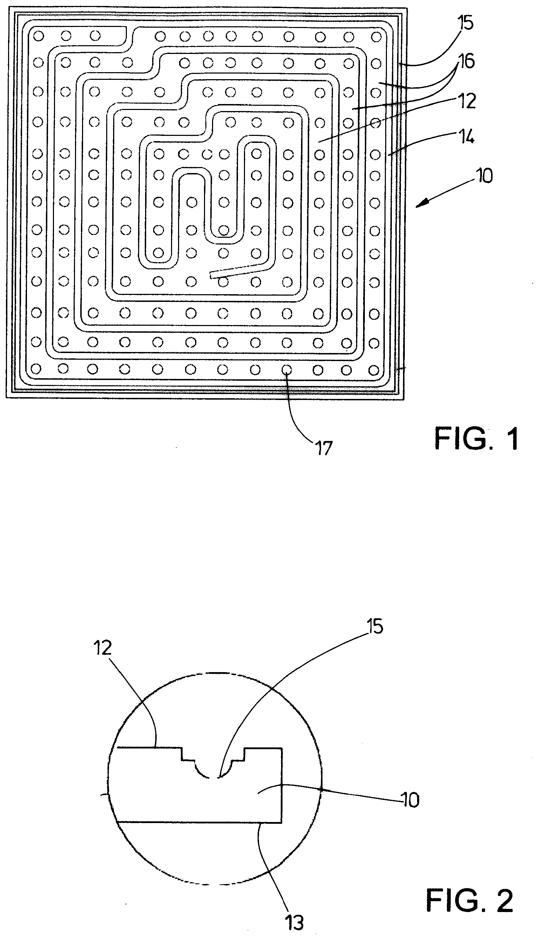

In der Fig. 1 ist ein Ausführungsbeispiel eines Funktionskörpers 10 dargestellt. Dieser Funktionskörper 10 kann einem nahezu beliebigen Belag 11 zugeordnet werden. Bei diesem Belag kann es sich um einen Bodenbelag oder einen Wandbelag oder ein Deckenelement, wie beispielsweise Kacheln, Fliesen, Paneelen oder dergleichen, handeln. Ein Merkmal des Funktionskörpers 10 besteht darin, dass er in seiner Größe und seiner Form wenigstens nahezu identisch ist mit einer Größe und einer Form des Belags bzw. der Fliese oder der Kachel. Er kann jedoch auch kleiner sein, so dass einem Belag mehrere Funktionskörper 10 zugeordnet sind. Abweichend von der in Fig. 1 dargestellten quadratischen Form kann der Funktionskörper 10 auch eine andere Form aufweisen.

Der quaderförmige Funktionskörper 10 weist eine Oberseite 12 auf und eine Unterseite 13. Während der Funktionskörper 10 mit der Unterseite 13 auf einem Untergrund ablegbar ist, ist die Oberseite 12 mit dem Belag 11 zusammenfügbar. In der Regel wird der Funktionskörper 10 mittels eines Klebstoffs mit dem Belag verbunden. Dabei kann der Funktionskörper als ein wärmedämmendes Mittel für den Belag 11 dienen. Insbesondere die Materialwahl für den Funktionskörper 10 bietet eine gute thermische Dämmung. So sind beispielsweise als Material Styropor, Schaum, Kunststoff, Holfasern, Stein-, Glas- oder Mineralwolle, Vakuumisolationspaneele oder dergleichen vorgesehen. Damit die thermische Isolierung des Belags 11 gleichmäßig erfolgt, erstreckt sich der Funktionskörper 10 wenigstens nahezu über die gesamte Fläche des Belags 11.

Die vorliegende Erfindung sieht es außerdem vor, dass der Oberseite 12 ein Mittel zum Temperieren zuordbar ist. Dabei kann es sich beispielsweise um einen Heizdraht handeln, der auf der Oberseite 12 schnecken- oder mäanderartig verlegt wird und zwar derart, dass die gesamte Oberseite 12 thermisch gleichmäßig abgedeckt wird. Durch diese Anordnung des Heizdrahtes auf der Oberseite 12 kann die Wärmeenergie gleichermaßen homogen auf den Belag 11 übertragen werden. Sofern der Heizdraht auf die Oberseite 12 des Funktionskörpers 10 verlegt wird, wird der Klebstoff zwischen den Drähten auf diese Oberseite 12 aufgetragen, sodass der Heizdraht sandwichartig zwischen dem Belag 11 und dem Funktionsköroper 10 eingeschlossen wird.

Das in der Fig. 1 dargestellte Ausführungsbeispiel eines Funktionskörpers 10 weist einen schneckenartigen Kanal 14 auf. Dieser Kanal 14 dient dazu, den Heizdraht in den Funktionskörper 10 zu integrieren und zwar derart, dass er noch im Bereich der Oberseite 12 liegt. Beim Verkleben des Funktionskörpers 10 mit dem Belag 11 wird der Kanal 14 ebenfalls mit Klebstoff gefüllt, um eine gleichmäßige Erwärmung des Belags 11 zu erwirken. Neben dem hier dargestellten schneckenförmigen Kanal ist es außerdem denkbar, dass in der Oberseite 12 ein mäanderförmiger Kanal, eine Wabenstruktur oder eine Profilierung mit einer Waffelstruktur angeordnet ist. In allen Ausführungsbeispielen werden das Mittel zum Temperieren bzw. der Heizdraht in das Muster bzw. die Struktur integriert und die entstehenden Zwischenräume mit Klebstoff aufgefüllt.

Bei dem in der Fig. 1 dargestellten Ausführungsbeispiel des Funktionskörpers 10 ist einem Seitenbereich der Oberseite 12 eine umlaufende Rille 15 zugeordnet. Diese Rille 15 oder Rinne, welche in der Fig. 2 in einem Querschnitt dargestellt ist, dient dazu, dass der Funktionskörper 10 flächig bzw. gleichmäßig und fest mit dem Belag 11 verbindbar ist. Insbesondere beim Verkleben kann die Rille 15 mit Klebstoff gefüllt werden, wodurch garantiert wird, dass wenigstens der umlaufende Seitenbereich des Funktionskörpers 10 mit einer Unterseite des Belags 11 verklebt wird.

Zwischen den Kanälen 14 weist die Oberseite 12 hervorstehende Stege 16 auf, die zum einen als Klebekontaktfläche und zum anderen der Stabilisierung dienen. Auf diesen Stegen 16 können weitere Elemente 17 vorgesehen sein, welche bspw. als hervorstehende Noppen ausgebildet sind, die als Klebekontaktflächen dienen. Außerdem können die Elemente 17 als Mulden ausgebildet sind, um eine größere Menge an Klebstoff aufzunehmen, welcher der Kontaktaufnahme mit dem Belag 11 dient.

Die Tiefe bzw. Frästiefe der Rille 15 kann 1 mm bis 5 mm, vorzugsweise 2 mm, betragen. Die Tiefe des Kanals 14 muss derart bemessen sein, dass der einzulegende Heizdraht wenigstens nahezu vollständig in den Kanal anordbar ist. Eine bevorzugte Tiefe bzw. Frästiefe beträgt 2 mm bis 6 mm, vorzugsweise 5 mm. Sofern die Elemente 17 als hervorstehende Noppen ausgebildet sind, ragen diese insbesondere 2 mm bis 5 mm, vorzugsweise 3 mm, über den Stegen 16 hervor.

Auf der Unterseite 13 des Funktionskörpers 10 ist ebenfalls ein Kanal 18 angeordnet. Dieser Kanal dient dazu, Verbindungen bzw. Kabel der auf der Unterseite 13 liegenden Heizdrähte zu verstauen. Insbesondere Verlängerungskabel oder Verbindungselemente können in dem Kanal 18 oder in den Aussparungen 19 verstaut werden. Diese Aussparungen 19 sind vorzugsweise nur der Unterseite 13 zugeordnet, um die Kontaktfläche zwischen der Unterseite 13 und dem Belag 11 maximal zu halten. Durch diese Form der Funktionskörper 10 lassen sich eine Vielzahl gleicher Funktionskörper 10 zu jeweils einem Belag 11 zusammenfügen und zwar ohne, dass zwischen den Funktionskörpern 10 bzw. den Belägen 11 signifikante Freiräume entstehen. Außerdem kann es vorgesehen sein, dass in einer zentralen Ausnehmung 20, die mit dem Kanal 18 in Verbindung steht, weitere Steckverbindungen oder Steuerelemente für eine Steuerung der Mittel zum Temperieren platzierbar sind. Auch der an der Unterseite 13 angeordnete Kanal 18 kann mit einem Klebstoff versehen werden, um den Heizdraht zu fixieren.

In den Eckbereichen 21 des Funktionskörpers 10 kann erfindungsgemäß eine hier nicht sichtbare Verstärkung integriert sein. Diese Verstärkung wird in eine Ausnehmung, die sich vorzugsweise von der Oberseite 12 bis zur Unterseite 13 erstreckt, platziert. Als Material bietet sich ein gießfähiger Stoff, wie beispielsweise Mörtel oder Harz, an. Dabei sind die Verstärkungen so zu platzieren bzw. auszubilden, dass sie einen möglichst kleinen Bereich der Fläche der Oberseite 12 einnehmen. Nur dadurch lässt sich eine homogene Verteilung des Heizdrahtes auf der Oberseite 12 realisieren.

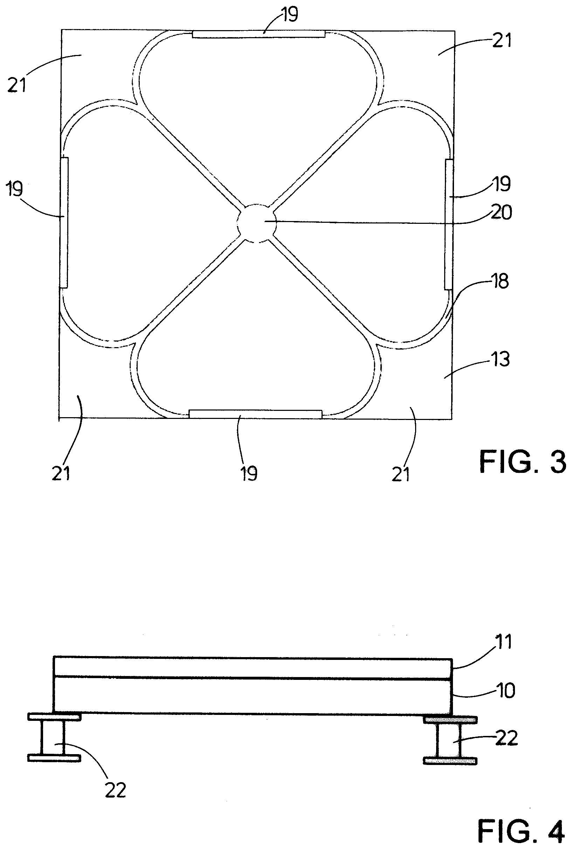

Sofern der Funktionskörper 10 mit seiner Unterseite 13 nicht direkt auf einem Untergrund abgelegt werden soll, sondern vielmehr mittels Stelzlagern 22 beabstandet über dem Untergrund anzuordnen ist, dienen die Verstärkungen in den Eckbereich 21 als Auflagepunkte für die Stelzlager 22 (Fig. 4). Dabei sind die Stelzlager 22 den Eckbereichen 21 derart zuzuordnen, dass sie mehrere nebeneinanderliegende Funktionskörper 10 aufnehmen können. Durch die Verstärkung in den Eckbereichen 21 kann der Belag 11 auch eine erhöhte Last aufnehmen und zwar ohne, dass sich der Funktionskörper 10 in den Bereichen der Verstärkung verformt.

Durch eine weitere Armierung oder weitere Verstärkungselemente in dem Funktionskörper 10 ist der Funktionskörper 10 derart stabilisierbar, dass auch besonders dünne Beläge 11 bzw. Fliesen mittels Stelzlagern 22 auf einem Untergrund positionierbar sind.

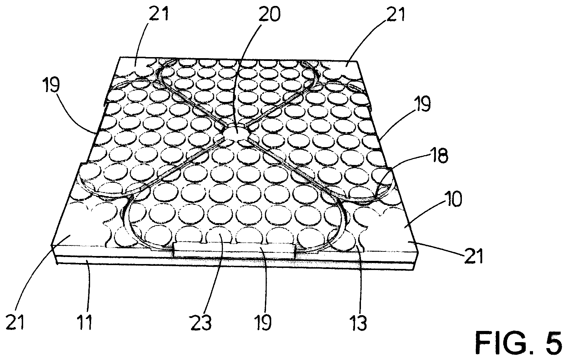

In der Fig. 5 ist ein weiteres Ausführungsbeispiel für einen Funktionskörper 10 dargestellt. Dabei weist die Unterseite 13 ein gleichmäßiges Muster an Noppen 23 auf. Insbesondere für den Fall, bei dem die Funktionskörper 10 mit der Unterseite 13 auf einem Untergrund abgesetzt werden, können die Noppen 23 dazu dienen, eine Haftreibung zwischen der Unterseite 13 und dem Untergrund zu erhöhen. Außerdem kann zwischen den Noppen 23 Feuchtigkeit besser abfließen bzw. zirkulieren, sodass diese Noppen 23 eine Drainagewirkung ausbilden. Neben der hier dargestellten Form der Noppen 23 sind auch andere Formen, wie beispielsweise Stege oder Polygone, denkbar.

Der hier beschriebene Funktionskörper zeichnet sich außerdem durch ein besonders einfaches und vorteilhaftes Herstellungsverfahren aus. Das Verfahren zur Herstellung kann es vorsehen, dass in einem ersten Schritt der Funktionskörper 10 an sich geformt wird. Dabei wird zunächst ein Grundkörper, insbesondere maschinell oder händisch, geformt bzw. gegossen und/oder auf eine dem Belag 11 entsprechenden Größe und Form geschnitten und ggf. der Kanal 14 hineingefräst oder hineingeschnitten. In einem weiteren Schritt können die Eckbereiche 21 derart präpariert werden, insbesondere Schnitte vorgenommen werden, dass das gießfähige Material, insbesondere ein Mörtel oder ein Harz, in die Leerräume gegossen werden kann. In einem weiteren Schritt kann das Mittel zum Temperieren bzw. der Heizdraht in dem Kanal 14 verlegt werden. Daraufhin kann die gesamte Oberseite 12 des Funktionskörpers 10 mit einem entsprechenden Klebemittel beaufschlagt werden und sodann der Belag 11 auf die Oberseite 12 gesetzt werden. Sobald das Klebemittel wenigstens angetrocknet ist, lassen sich der Funktionskörper 10 mitsamt dem Belag umdrehen und die Verbindungs- oder Kopplungsmittel des Mittels zum Temperieren bzw. die Kabel in den Kanälen 18 an der Unterseite 13 des Funktionskörpers 10 verstauen und ggf. fixieren. Dadurch lässt sich durch wenige Schritte bausatzartig eine Einheit aus einem Belag mit einem Funktionskörper herstellen, wobei der Funktionskörper den Belag temperieren kann, ihm eine zusätzliche Stabilität bietet sowie die Möglichkeit eröffnet auch dünne Beläge mittels Stelzlagern auf einem Untergrund zu positionieren.

### Bezugszeichenliste

- 10: Funktionskörper
- 11: Belag
- 12: Oberseite
- 13: Unterseite
- 14: Kanal
- 15: Rille
- 16: Steg
- 17: Element
- 18: Kanal
- 19: Aussparung
- 20: Ausnehmung
- 21: Eckbereich
- 22: Stelzlager
- 23: Noppe

## Patentansprüche

1. Funktionskörper (10) für einen Belag (11), insbesondere einen Bodenbelag oder einen Wandbelag oder für ein Deckenelement, wie beispielsweise eine Fliese, eine Kachel oder ein Paneel, mit einer auf einem Untergrund ablegbaren Unterseite (13) und einer mit dem Belag (11) zusammenfügbaren Oberseite (12), wobei auf oder in die Oberseite (12) ein Mittel zum Temperieren anordbar ist, wobei
eine Größe und eine Form einer Grundfläche des Funktionskörpers (10) wenigstens nahezu einer Größe und einer Form einer Grundfläche eines Belags (11) entspricht und wobei der Funktionskörper (10) aus einem wärmedämmenden Material besteht, **dadurch gekennzeichnet, dass**
eine äußere Umrandung an der Oberseite (12) des Funktionskörpers (10) ein Dichtmittel aufweist und mit dem Belag zusammenführbar ist.

2. Funktionskörper (10) nach Anspruch 1, **dadurch gekennzeichnet, dass** das wärmedämmende Material aus einem Schaum, Styropor, einem Kunststoff, Holzfasern, Stein-, Glas- oder Mineralwolle, Vakuumisolationspaneele besteht.

3. Funktionskörper (10) nach Anspruch 1 oder 2, **dadurch gekennzeichnet, dass** das Dichtmittel eine Dichtfläche oder eine Dichtlippe aufweist und vorzugsweise selbstklebend ist.

4. Funktionskörper (10) nach einem der vorherigen Ansprüche, **dadurch gekennzeichnet, dass** in dem Funktionskörper (10) Verstärkungselemente und/oder Armierungselemente aus Kunststoff oder Metal integriert, vorzugsweise eingearbeitet oder eingegossen, sind, wobei die Verstärkungselemente und/oder Armierungselemente in Eckbereichen und/oder Seitenbereichen und/oder kreuzartig über die gesamte Fläche des Funktionskörpers (10) und/oder flächig über den Funktionskörper (10) angeordnet sind und wobei mindestens ein Bereich, vorzugsweise ein Kantenbereich und/oder ein Eckbereich (21), insbesondere alle vier Eckbereiche (21) eines rechteckigen Funktionskörpers (10), des Funktionskörpers (10) eine Verstärkung aufweist, wobei es sich bei der Verstärkung um ein, insbesondere gießfähiges, Material wie beispielsweise Harz oder Mörtel handelt und sich diese Verstärkung über eine gesamte Höhe des Funktionskörpers (10) in dem Funktionskörper (10) erstreckt.

5. Funktionskörper (10) nach Anspruch 4, **dadurch gekennzeichnet, dass** der Funktionskörper (10) jeweils mit einer Verstärkung auf einem Stelzlager (22) absetzbar ist, wobei ein Funktionskörper (10) mit vier eine Verstärkung aufweisenden Eckbereichen (21) auf vier Stelzlagern (22) absetzbar ist und/oder mit einer Verstärkung eines zentralen Bereiches des Funktionskörpers (10) auf mindestens einem Stelzlager (22) absetzbar ist.

6. Funktionskörper (10) nach einem der vorherigen Ansprüche, **dadurch gekennzeichnet, dass** das Mittel zum Temperieren zwischen dem Belag (11) und der Oberseite (12) des Funktionskörpers (10) angeordnet ist oder, dass das Mittel zum Temperieren in eine Oberseite (12) des Funktionskörpers (10) integriert ist, wobei die Oberseite (12) des Funktionskörpers (10) mit dem Belag (11) verklebt ist.

7. Funktionskörper (10) nach einem der vorherigen Ansprüche, **dadurch gekennzeichnet, dass** die Oberseite (12) des Funktionskörpers (10) mindestens einen, insbesondere schnecken- oder mäanderförmigen, Kanal (14) oder ein wabenartiges Muster oder eine Profilierung mit einer Waffelstruktur zur Aufnahme des Mittels zum Temperieren aufweist, wobei sich der Kanal (14) oder das Muster über die gesamte Oberseite (12) erstreckt, wobei das Mittel zum Temperieren ein Heizdraht, ein Rohr zum Führen eines Wärme- oder Kältemittels ist, das in dem Kanal (18) oder dem Muster angeordnet ist.

8. Funktionskörper (10) nach Anspruch 7, **dadurch gekennzeichnet, dass** zwei erste Enden bzw. Anschlüsse des Heizdrahtes oder der Rohre über einen Rand des Funktionskörpers (10) weggeführt sind und Mittel, insbesondere Stecker, Klemmen, Crimp-Verbindungen, Lötverbindungen, Ventile, aufweisen zum Verbinden mit einem weiteren Kabel bzw. mit einem weiteren Rohr, vorzugsweise weiteren Heizdrähten oder Rohren benachbarter Funktionskörper (10).

9. Funktionskörper (10) nach einem der vorherigen Ansprüche, **dadurch gekennzeichnet, dass** die Unterseite (13) des Funktionskörpers (10) mindestens einen, insbesondere schnecken- oder mäanderförmigen, Kanal (18) oder ein wabenartiges Muster zur Aufnahme von Kabeln der Mittel zum Temperieren aufweist, wobei die Unterseite (13) des Funktionskörpers (10) eine symmetrische Kanalstruktur aufweist zur Aufnahme gleichlanger Kabelabschnitte, so dass Steckverbindungen benachbarter Funktionskörper (10) im gleichen Maße über den jeweiligen Funktionskörper (10) hinausragen.

10. Funktionskörper (10) nach einem der vorherigen Ansprüche, **dadurch gekennzeichnet, dass** Seitenbereiche des Funktionskörpers (10) Aussparungen (19) aufweisen zur Aufnahme der Mittel, insbesondere Stecker, Klemmen, Crimp-Verbindungen, Lötverbindungen, Ventilen, zum Verbinden mehrerer Heizdrähte oder Rohre benachbarter Funktionskörper (10).

11. Funktionskörper (10) nach einem der vorherigen Ansprüche, **dadurch gekennzeichnet, dass** mittels einer Steuereinheit die Temperatur für einen Belag (11) mit einem Mittel zum Temperieren festlegbar ist und weiter mit dem Belag (11) bzw mit dem Mittel zum Temperieren gekoppelte Beläge (11) sich an diese Temperatur anpassen, wobei einzelne Beläge (11) oder Gruppen von Belägen (11) individuell durch die Steuereinheit temperierbar sind und/oder dass die Steuereinheit mit mindestens einem in den Funktionskörper (10) und/oder den Belag (11) integrierten Sensormittel verbunden ist, wobei der Funktionskörper (10) und/oder der Belag (11) in Abhängigkeit von einem Messwert des Sensormittels temperierbar sind und/oder dass es sich bei dem mindestens einen Sensormittel um einen Temperatursensor, einen Feuchtigkeitssensor oder einen Drucksensor handeln kann und/oder dass in den Funktionskörper (10) und/oder in den Belag (11) weitere Komponenten integrierbar sind, wie beispielsweise Lautsprecher, Leuchtmittel, Steckdosen, Netzwerkdosen die, insbesondere individuell oder in Gruppen, über entsprechende Leitungen unterhalb des Belags (11) ansteuerbar sind.

12. Funktionskörper (10) nach einem der vorherigen Ansprüche, **dadurch gekennzeichnet, dass** die Funktionskörper (10) durch eine Metall- oder eine Kunststoffschicht oder eine Schale, insbesondere eine Metall- oder Kunststoffschale, geschützt sind.

13. Belag (11), insbesondere Bodenbelag oder Wandbelag oder Deckenelement, wie beispielsweise eine Fliese, eine Kachel oder ein Paneel, eine Faserzementplatte, eine Gipskartonplatte oder eine Entkopplungsmembran, die mit einer Seite mit einem Funktionskörper (10) gemäß mindestens einem der Ansprüche 1 bis 11 zusammengefügt ist.

14. Verfahren zur Herstellung eines Belags (11) gemäß dem Anspruch 13 mit einem Funktionskörper (10), **dadurch gekennzeichnet, dass** auf einen strukturierten Funktionskörpers (10), in dem ein Mittel zum Temperieren integriert ist, ein fließfähiger Klebstoff aufgebracht wird und auf diesen mit Klebstoff versehene Funktionskörper (10) der Belag (11) abgelegt wird, wobei der Belag (11) auf der mit Klebstoff beaufschlagten Oberseite (12) des Funktionskörpers (10) und einer den Funktionskörper (10) umlaufenden Dichtung abgelegt wird und zum Austrocknen des Klebstoffs der Funktionskörper (10) zusammen mit dem Belag (10) gedreht wird, so dass der Klebstoff auf einer Unterseite des Belags (10) austrocknet.

## Claims

1. A functional body (10) for a covering (11), in particular a floor covering or a wall covering or for a cover element, such as, for example, a tile, a glazed tile or a panel, having a bottom side (13) which can be deposited on a substrate and a top side (12) which can be joined together with the covering (11), wherein a temperature-control means can be arranged on or in the top side (12), wherein a size and a shape of a base area of the functional body (10) at least virtually corresponds to a size and a shape of a base area of a covering (11),and wherein the functional body (10) is composed of a heat-insulating material, **characterized in that** an outer border on the top side (12) of the functional body (10) has a sealing means and can be brought together with the covering.

2. The functional body (10) as claimed in claim 1, **characterized in that** the heat-insulating material is composed of a foam, polystyrene, a plastic, wood fibres, stone wool, glass wool or mineral wool, vacuum insulation panels.

3. The functional body (10) as claimed in claim 1 or 2, **characterized in that** the sealing means has a sealing surface or a sealing lip and is preferably self-adhesive.

4. The functional body (10) as claimed in one of the preceding claims, **characterized in that** reinforcing elements and/or reinforcement elements composed of plastic or metal are integrated, preferably incorporated or moulded, in the functional body (10), wherein the reinforcing elements and/or reinforcement elements are arranged in corner regions and/or side regions and/or in a cross-like manner over the total area of the functional body (10) and/or areally over the functional body (10) and wherein at least one region, preferably an edge region and/or a corner region (21), in particular all four corner regions (21) of a rectangular functional body (10), of the functional body (10) has a reinforcement, wherein the reinforcement is a, in particular mouldable, material such as, for example, resin or mortar, and said reinforcement extends over a total height of the functional body (10) in the functional body (10).

5. The functional body (10) as claimed in claim 4, **characterized in that** the functional body (10) can be set down with a respective reinforcement on a raised floor support (22), wherein a functional body (10) can be set down with four corner regions (21), which have a reinforcement, on four raised floor supports (22) and/or can be set down with a reinforcement of a central region of the functional body (10) on at least one raised floor support (22).

6. The functional body (10) as claimed in one of the preceding claims, **characterized in that** the temperature-control means is arranged between the covering (11) and the top side (12) of the functional body (10), or **in that** the temperature-control means is integrated in a top side (12) of the functional body (10), wherein the top side (12) of the functional body (10) is adhesively bonded to the covering (11).

7. The functional body (10) as claimed in one of the preceding claims, **characterized in that** the top side (12) of the functional body (10) has at least one, in particular winding or meandering, channel (14) or a honeycomb-like pattern or a profiling with a waffle structure in order to receive the temperature-control means, wherein the channel (14) or the pattern extends over the entire top side (12), wherein the temperature-control means is a heating wire, a pipe for guiding a heating means or cooling means, which is arranged in the channel (18) or the pattern.

8. The functional body (10) as claimed in claim 7, **characterized in that** two first ends or connections of the heating wire or of the pipes are led away over a periphery of the functional body (10) and have means, in particular plug-in connectors, clamps, crimp connections, solder connections, valves, for connection to a further cable or to a further pipe, preferably further heating wires or pipes of adjacent functional bodies (10).

9. The functional body (10) as claimed in one of the preceding claims, **characterized in that** the bottom side (13) of the functional body (10) has at least one, in particular winding or meandering, channel (18) or a honeycomb-like pattern in order to receive cables of the temperature-control means, wherein the bottom side (13) of the functional body (10) has a symmetrical channel structure in order to receive cable portions of identical length, such that plug-in connections of adjacent functional bodies (10) project to the same extent beyond the respective functional body (10).

10. The functional body (10) as claimed in one of the preceding claims, **characterized in that** side regions of the functional body (10) have cutouts (19) in order to receive the means, in particular plug-in connectors, clamps, crimp connections, solder connections, valves, for connection of a plurality of heating wires or pipes of adjacent functional bodies (10).

11. The functional body (10) as claimed in one of the preceding claims, **characterized in that** the temperature for a covering (11) with a temperature-control means can be set by means of a control unit and coverings (11) which are also coupled to the covering (11) or to the temperature-control means adapt to said temperature, wherein the temperature of individual coverings (11) or of groups of coverings (11) can be controlled individually by way of the control unit, and/or **in that** the control unit is connected to at least one sensor means which is integrated in the functional body (10) and/or the covering (11), wherein the temperature of the functional body (10) and/or of the covering (11) can be controlled in dependence on a measurement value of the sensor means, and/or **in that** the at least one sensor means can be a temperature sensor, a moisture sensor or a pressure sensor, and/or **in that** further components can be integrated in the functional body (10) and/or in the covering (11), such as, for example, speakers, illuminants, power sockets, network sockets, said components being able to be actuated, in particular individually or in groups, via corresponding lines beneath the covering (11).

12. The functional body (10) as claimed in one of the preceding claims, **characterized in that** the functional bodies (10) are protected by a metal layer or a plastics layer or a shell, in particular a metal or plastics shell.

13. A covering (11), in particular a floor covering or a wall covering or a cover element, such as, for example, a tile, a glazed tile or a panel, a fibre-cement plate, a gypsum plasterboard or a decoupling membrane, one side of which is joined together with a functional body (10) as claimed in at least one of claims 1 to 11.

14. A method for producing a covering (11) as claimed in claim 13 with a functional body (10), **characterized in that** a flowable adhesive is applied to a structured functional body (10), in which a temperature-control means is integrated, and the covering (11) is deposited on said functional body (10) which has been provided with adhesive, wherein the covering (11) is deposited on the top side (12) of the functional body (10), said top side being provided with adhesive, and on a seal which runs around the functional body (10), and the functional body (10) is rotated together with the covering (10) in order to dry the adhesive, such that the adhesive dries on a bottom side of the covering (10).

## Revendications

1. Corps fonctionnel (10) pour un revêtement (11), en particulier un revêtement de sol ou un revêtement mural ou pour un élément de plafond, comme par exemple un carreau, une tuile ou un panneau, avec un côté inférieur (13) apte à être posé sur un support et un côté supérieur (12) apte à être assemblé avec le revêtement (11), un moyen de régulation thermique apte à être disposé sur ou dans le côté supérieur (12), une taille et une forme d'une surface de base du corps fonctionnel (10) correspondant au moins presque à une taille et une forme d'une surface de base d'un revêtement (11) et le corps fonctionnel (10) étant constitué d'un matériau calorifuge, **caractérisé en ce qu'**un bord extérieur sur le côté supérieur (12) du corps fonctionnel (10) présente un moyen d'étanchéité et est apte à être assemblé au revêtement.

2. Corps fonctionnel (10) selon la revendication 1, **caractérisé en ce que** le matériau d'isolation thermique est constitué d'une mousse, de polystyrène, d'une matière plastique, de fibres de bois, de laine de roche, de verre ou de laine minérale, de panneaux d'isolation sous vide.

3. Corps fonctionnel (10) selon la revendication 1 ou 2, **caractérisé en ce que** le moyen d'étanchéité présente une surface d'étanchéité ou une lèvre d'étanchéité et est de préférence autocollant.

4. Corps fonctionnel (10) selon l'une des revendications précédentes, **caractérisé en ce que** des éléments de renforcement et/ou des éléments d'armature en matière plastique ou en métal sont intégrés, de préférence incorporés ou coulés, dans le corps fonctionnel (10), les éléments de renforcement et/ou les éléments d'armature étant disposés dans des zones de coin et/ou des zones latérales et/ou en croix sur toute la surface du corps fonctionnel (10) et/ou à plat sur le corps fonctionnel (10) et au moins une zone, de préférence une zone de bordure et/ou une zone de coin (21), en particulier les quatre zones de coin (21) d'un corps fonctionnel (10) rectangulaire, du corps fonctionnel (10) présente un renforcement, le renforcement étant un matériau, en particulier apte à être coulé, comme par exemple de la résine ou du mortier, et ce renforcement s'étendant sur toute une hauteur du corps fonctionnel (10) dans le corps fonctionnel (10).

5. Corps fonctionnel (10) selon la revendication 4, **caractérisé en ce que** le corps fonctionnel (10) est apte à être déposé avec un renforcement sur un plot (22), un corps fonctionnel (10) avec quatre zones d'angle (21) présentant un renforcement apte à être déposé sur quatre plots (22) et/ou avec un renforcement d'une zone centrale du corps fonctionnel (10) apte à être déposé sur au moins un plot (22).

6. Corps fonctionnel (10) selon l'une des revendications précédentes, **caractérisé en ce que** le moyen de régulation de température est disposé entre le revêtement (11) et le côté supérieur (12) du corps fonctionnel (10) ou **en ce que** le moyen de régulation de température est intégré dans un côté supérieur (12) du corps fonctionnel (10), le côté supérieur (12) du corps fonctionnel (10) étant collé au revêtement (11).

7. Corps fonctionnel (10) selon l'une des revendications précédentes, **caractérisé en ce que** le côté supérieur (12) du corps fonctionnel (10) présente au moins un canal (14), en particulier en forme d'escargot ou de méandre, ou un motif en nid d'abeille ou un profilage avec une structure gaufrée pour recevoir le moyen de régulation de la température, le canal (14) ou le motif s'étendant sur toute le côté supérieur (12), le moyen de régulation de la température étant un fil chauffant, un tube pour guider un fluide thermique ou frigorigène, qui est disposé dans le canal (18) ou le motif.

8. Corps fonctionnel (10) selon la revendication 7, **caractérisé en ce que** deux premières extrémités ou connexions du fil chauffant ou des tubes s'étendent au-delà d'un bord du corps fonctionnel (10) et présentent des moyens, en particulier des connecteurs, des bornes, des connexions par sertissage, des connexions soudées, des vannes, pour la connexion à un autre câble ou à un autre tube, de préférence à d'autres fils chauffants ou tubes de corps fonctionnels (10) voisins.

9. Corps fonctionnel (10) selon l'une des revendications précédentes, **caractérisé en ce que** le côté inférieur (13) du corps fonctionnel (10) présente au moins un canal (18), en particulier en forme d'escargot ou de méandres, ou un motif en nid d'abeilles pour recevoir des câbles des moyens de régulation de température, le côté inférieur (13) du corps fonctionnel (10) présentant une structure de canal symétrique pour recevoir des tronçons de câble de même longueur, de sorte que les connexions enfichables de corps fonctionnels (10) voisins dépassent dans la même mesure du corps fonctionnel (10) correspondant.

10. Corps fonctionnel (10) selon l'une des revendications précédentes, **caractérisé en ce que** les zones latérales du corps fonctionnel (10) présentent des évidements (19) destinés à recevoir les moyens, en particulier des connecteurs, des bornes, des connexions par sertissage, des connexions par brasage, des vannes, pour relier plusieurs fils chauffants ou tubes de corps fonctionnels (10) voisins.

11. Corps fonctionnel (10) selon l'une des revendications précédentes, **caractérisé en ce qu'**au moyen d'une unité de commande, la température d'un revêtement (11) est apte à être fixée avec un moyen de régulation de la température et est apte à être en outre réglée avec le revêtement (11) ou le moyen de régulation de la température, les revêtements (11) reliés au moyen de régulation de la température s'adaptent à cette température, des revêtements individuels (11) ou des groupes de revêtements (11) étant aptes à être régulés individuellement en température par l'unité de commande et/ou **en ce que** l'unité de commande est reliée à au moins un moyen de détection intégré dans le corps fonctionnel (10) et/ou le revêtement (11), le corps fonctionnel (10) et/ou le revêtement (11) apte à être régulés en température en fonction d'une valeur de mesure du moyen de détection et/ou **en ce que** ledit au moins un moyen de détection est un capteur de température, un capteur d'humidité ou un capteur de pression et/ou **en ce que** d'autres composants sont aptes à être intégrés dans le corps fonctionnel (10) et/ou dans le revêtement (11), comme par exemple des haut-parleurs, des moyens d'éclairage, des prises de courant, des prises de réseau qui sont aptes à être commandés, en particulier individuellement ou en groupes, par des lignes correspondantes sous le revêtement (11).

12. Corps fonctionnel (10) selon l'une des revendications précédentes, **caractérisé en ce que** les corps fonctionnels (10) sont protégés par une couche de métal ou de plastique ou par une coque, en particulier une coque de métal ou de plastique.

13. Revêtement (11), en particulier un revêtement de sol ou un revêtement de paroi ou un élément de plafond, tel qu'un carreau, une tuile ou un panneau, une plaque de fibrociment, une plaque de plâtre ou une membrane de découplage, dont une face est assemblée à un corps fonctionnel (10) selon au moins l'une des revendications 1 à 11.

14. Procédé de fabrication d'un revêtement (11) selon la revendication 13 avec un corps fonctionnel (10), **caractérisé en ce qu'**un adhésif fluide est appliqué sur un corps fonctionnel structuré (10) dans lequel est intégré un moyen de régulation de température, et le revêtement (11) est déposé sur ce corps fonctionnel (10) pourvu d'adhésif, le revêtement (11) étant placé sur le côté supérieur (12) du corps fonctionnel (10), sur lequel l'adhésif a été appliqué, et sur un joint d'étanchéité entourant le corps fonctionnel (10) et le corps fonctionnel (10) étant mis en rotation avec le revêtement (10) pour sécher l'adhésif, de sorte que l'adhésif sèche sur une côté inférieur du revêtement (10).
